# EUROPEAN PATENT APPLICATION

(11) **EP 4 627 927 A1**
(43) Date of publication of application: **08.10.2025**
(21) Application number: 25166284.7
(22) Date of filing: 26.03.2025
(51) Int. Cl.: A21D 15/00

(54) **METHOD FOR PRESERVING PIZZAS IN A MODIFIED ATMOSPHERE**

(30) Priority: 05.04.2024 IT 202400007543
(71) Applicant: Cryotek Group S.r.l., 20093 Cologno Monzese (MI) (IT)
(72) Inventor: GRASSI, Biagio, 55100 Lucca (IT)
(74) Representative: Corradini, Cesare

(57) **Abstract**

A method for preserving a pizza is described which comprises:
- baking (B1) a disc of pizza dough for a variable time between 1 and 3 minutes so as to make a pre-cooked pizza,
- cooling (B2) the pre-cooked pizza to a temperature comprised between 3°C and 5°C
- placing (B4) said pre-cooked pizza in a container (1),
- creating a vacuum inside the container (B5),
- introducing (B6) a mixture of nitrogen and carbon dioxide into the container wherein the nitrogen concentration varies from 20% to 30% of the mixture and the carbon dioxide concentration varies from 80% to 70% of the mixture.

## Description

### TECHNICAL FIELD

The present invention relates to a method for preserving pizzas in a modified atmosphere, in particular an atmosphere of a mixture of nitrogen and carbon dioxide.

### PRIOR ART

As is well known, pizza is one of the most popular and appreciated foods in the world, even though it is prepared and consumed in very different ways.

Artisanal pizza is prepared by hand in pizzerias and eaten immediately on the spot or, if for take-away, at home; many catering establishments, on the other hand, not equipped with an oven and the necessary personnel, e.g. bars and fast food restaurants, use industrial frozen pizzas, which are reheated when needed. Finally, there are numerous industrial frozen pizzas available in the supermarket, which can be stored in the freezer and baked in the oven when needed.

The difference in taste and aroma between artisanal and industrial pizzas is clear to everyone.

The purpose of the present invention is to provide a method for preserving a pizza in a modified atmosphere.

An object of the present invention is therefore to overcome the drawbacks outlined above. A further object is to achieve such an objective in the context of a rational, effective and cost-effective solution.

These objects are achieved by the features of the invention set forth in the independent claim. The dependent claims outline preferred and/or particularly advantageous aspects of the invention.

### DISCLOSURE OF THE INVENTION

In particular, the invention makes available a method for preserving a pizza, said method comprising:
- baking a disc of pizza dough for a variable time between 1 and 3 minutes so as to make a pre-cooked pizza,
- cooling the pre-cooked pizza to a temperature comprised between 3°C and 5°C
- placing said pre-cooked pizza in a container,
- creating a vacuum inside the container,
- introducing a mixture of nitrogen and carbon dioxide into the container wherein the nitrogen concentration varies from 20% to 30% of the mixture and the carbon dioxide concentration varies from 80% to 70% of the mixture.

This guarantees the food freshness of the pizza without compromising its organoleptic qualities. This type of pizza preservation naturally prolongs the food's shelf life, keeping its flavour and quality intact.

Preferably the nitrogen concentration is 27.5% of the mixture and the carbon dioxide concentration is 72.5% of the mixture.

This results in better preservation of the pizza, with low proliferation of bacteria and moulds.

Preferably, the method comprises a step of adding cheese to the now cooled pre-cooked pizza before the pre-cooked pizza is placed in the container.

In this way, the cheese is not cooked immediately but left fresh and then cooked once the pizza is taken out of the container.

Preferably the step of cooling the pre-cooked pizza takes place at a temperature of 4°C. This results in better cooling of the pizza.

Preferably, the disc of pizza dough is baked at a temperature comprised between 380°C and 400°C.

Preferably, the nitrogen and carbon dioxide mixture is introduced into the container for a time period comprised between 10 and 15 seconds.

Preferably, the nitrogen and carbon dioxide mixture is introduced into the container for a time period of 12 seconds.

This results in better distribution of the nitrogen-carbon dioxide mixture within the container.

Preferably the disc of pizza dough weighs between 200 and 300 grams.

Preferably, the disc of pizza dough is baked for between 1 minute 45 seconds and 2 minutes 15 seconds.

In accordance with the invention it is possible to provide an apparatus for actuating the method of preserving a pizza in accordance with any one of the preceding claims, said apparatus comprising a mixer having nitrogen and carbon dioxide at the input and configured to provide said mixture of nitrogen and carbon dioxide at the output to be introduced into said container in which said pre-cooked pizza is placed and after creating a vacuum inside the container.

### BRIEF DESCRIPTION OF THE DRAWINGS

Further features and advantages of the invention will be more apparent after reading the following description provided by way of non-limiting example, with the aid of the figures illustrated in the accompanying tables.
Figure 1 is a block diagram of the various steps of the method for preserving pizzas in a modified atmosphere according to the present invention;
Figure 2 is a view of a device used for the method of preserving pizzas in a modified atmosphere according to the present invention;
Figure 3 is a view of a pizza container used for the method of preserving pizzas in a modified atmosphere according to the present invention;
Figure 4 is a view of the container of Figure 3 arranged in the device of Figure 2 used for the method of preserving pizzas in a modified atmosphere according to the present invention;
Figures 5 and 6 are views of a mixer used for the method for preserving pizzas in a modified atmosphere according to the present invention.

### BEST MODE OF THE INVENTION

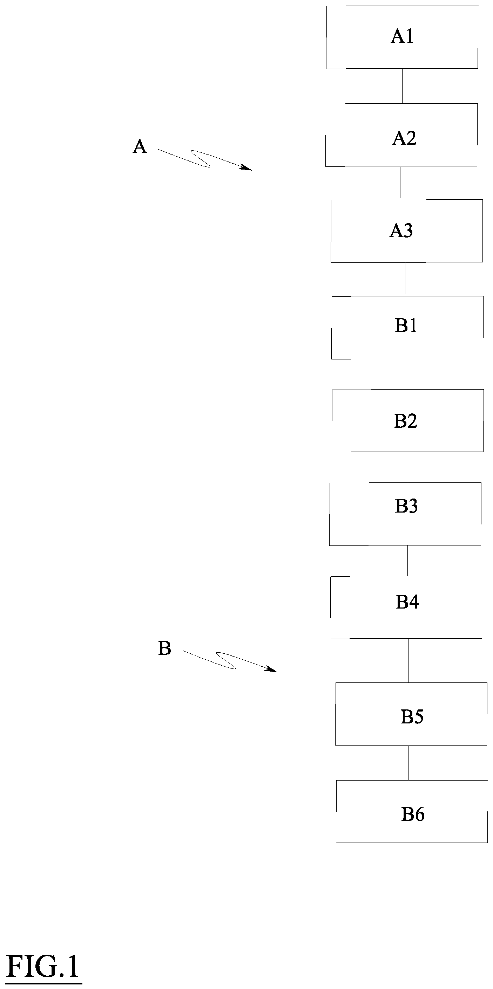

With particular reference to Figure 1, a method for preserving pizzas in a modified atmosphere in accordance with the present invention is shown.

A modified atmosphere is defined as an atmosphere comprising, in particular, a mixture of nitrogen and carbon dioxide.

The method comprises a step B for preserving the pizza, preferably comprising a set of sub-steps for preserving the pizza, even more preferably a succession of sub-steps for preserving the pizza.

Preferably the method comprises an initial step A of producing a disc of pizza dough, preferably comprising a set of production sub-steps, even more preferably a succession of production sub-steps. Preferably, the disc of pizza dough produced in step A is subjected to step B of the preservation method.

Step A of producing a disc of pizza dough comprises a sub-step A3 of producing a disc of pizza dough starting from a loaf or piece of dough.

Preferably, step A3 is preceded by a series of sub-steps A1-A2, which comprises a first sub-step A1 for making pizza dough.

As known in the state of the art, pizza doughs are made by kneading machines with water, flour and yeast. In particular, according to the present invention, oil is also included in the production of the dough.

Preferably, the dough obtained from the kneading machine is placed on a workbench and sprinkled with a little oil.

After the dough has rested for a certain period of time, e.g. 10 minutes, in a subsequent sub-step A2, the dough is divided into pieces or blocks weighing between 200 and 300 grams, preferably about 250 grams, and the aforesaid pieces are chilled in the refrigerator at a certain temperature, e.g. 4°C, for at least 48 hours.

Subsequently, each piece is removed from the refrigerator and, preferably after leaving the pieces at room temperature for a given period of time, e.g. 30 minutes, each piece can be processed in the next sub-step A3 to make a disc of pizza dough.

Preferably each piece is processed by hand, but it can also be processed using a special machine.

A disc of dough is made from each piece of dough in sub-step A3; the disc of dough preferably has a circular shape, but other shapes are possible such as rectangular or square.

The disc of pizza dough is preferably enriched with toppings arranged on its upper surface, in a variable quantity but preferably about 110 grams. Toppings used for the disc of pizza dough mean various ingredients, e.g. tomato, but cheese is excluded from them. However, the disc of pizza dough may have no toppings.

The disc of dough is preferably enriched with oil, which is placed on its upper surface, also in a variable amount, but preferably about 10 grams.

The preservation method comprises the sub-step B1 in which the disc of pizza dough is baked but not completely so as to obtain a pre-cooked pizza; that is, the disc of dough is baked not 100% but in a variable range of 70% to 80%.

Preferably, the disc of pizza dough is baked in an oven at a high temperature, preferably comprised between 380°C and 400°C.

The oven is preferably a wood-fired oven, but other types of oven can be used, e.g. a gas oven or an electric oven.

The disc of pizza dough is baked in the oven for a given period of time, preferably a time period comprised between 1 and 3 minutes, again preferably for about 2 minutes, preferably between 1.45 minutes and 2.15 minutes.

In a subsequent step B2, the resulting pre-cooked pizza is cooled to a temperature comprised between 3°C and 5°C, preferably 4°C.

Preferably, the pre-cooked pizza is placed inside a refrigerator or similar equipped with grilles. Preferably the pizza is placed on one of these grilles to promote air circulation.

Once the pre-cooked pizza has cooled down, i.e. the temperature of the pizza has reached a temperature comprised between 3°C and 5°C, preferably 4°C, in a sub-step B3, cheese, preferably mozzarella, is added to the cooled pre-cooked pizza. Preferably the amount of mozzarella added is comprised between 100 and 200 grams, preferably 120 grams.

Afterwards, the pizza can be packaged and stored.

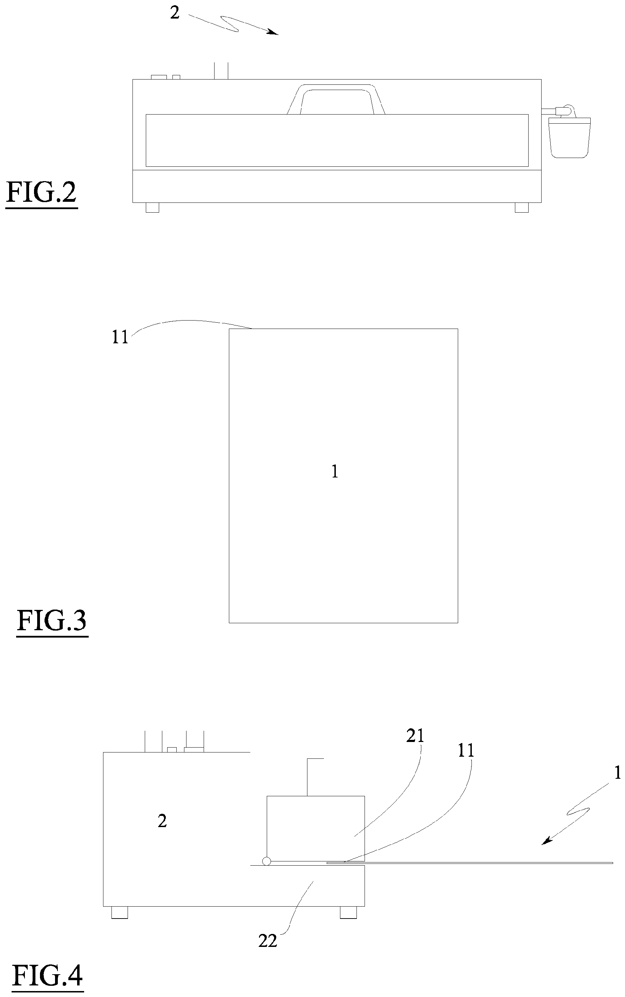

The method includes a subsequent sub-step B4 for placing said pre-cooked, cooled and preferably cheese-covered pizza into a container 1 (Figure 3). The container 1 is a container suitable for preserving food with a mixture of nitrogen and carbon dioxide. The container 1 is normally airtight and not rigid but soft, preferably in the form of a rectangular or square bag to accommodate a pizza inside, preferably circular in shape. Placing the pre-cooked pizza into the container 1 is normally carried out by an operator.

Once the pizza has been placed inside the container 1, there is a sub-step B5 of creating the vacuum inside the container 1 by means of a device 2 (Figure 2); to implement said sub-step B5, the operator places the container 1 with the pizza inside into the device 2 (Figure 4) adapted to create the vacuum inside the container 1.

Specifically, the flaps 11 of the container 1 are placed by an operator between the parts 21 and 22 of the device 2; an aspirator of the device 2 sucks air into the container 1 to create a vacuum.

Any device known and capable of creating a vacuum inside a bag containing food and known in the state of the art can be used as the device 2.

Finally, the preservation method continues with the sub-step B6 of introducing a mixture of nitrogen and carbon dioxide into the container 1 wherein the concentration of nitrogen varies from 20% to 30% of the mixture and the concentration of carbon dioxide varies from 80% to 70% of the mixture.

Preferably, the higher concentration of carbon dioxide compared to the concentration of nitrogen in the mixture allows the same mixture to have a greater cooling power. This allows pre-cooked pizza to be stored longer and preferably at higher temperatures, for example in the refrigerator at 4°C.Preferably, the mixture of nitrogen and carbon dioxide has a nitrogen concentration of about 27.5% of the mixture and a carbon dioxide concentration of about 72.5% of the mixture; this results in good and longer preservation of the pizza. In fact, with this type of mixture it has been observed in the laboratory that low proliferation of microorganisms and bacteria (especially staphylococci) and low generation of moulds is obtained, in particular, the presence of coagulase-positive Staphylococci and Enterobacteriaceae is completely eliminated, while Listeria monocytogenes is undetectable.

Preferably the amount of mixture that can be introduced in each container 1 depends on the capacity of the container.

The sub-step B6 takes place for a certain time period comprised between 10 and 15 seconds.

Preferably, insertion of the nitrogen-carbon dioxide mixture into the container takes place over a period of 12 seconds if the mixture is introduced at a flow rate of five litres per minute and the container 1 can accommodate one litre of the mixture; this results in correct distribution of the nitrogen-carbon dioxide mixture inside the container 1.

After step B6, the container 1 is preferably placed in the refrigerator at a temperature of 4°C.

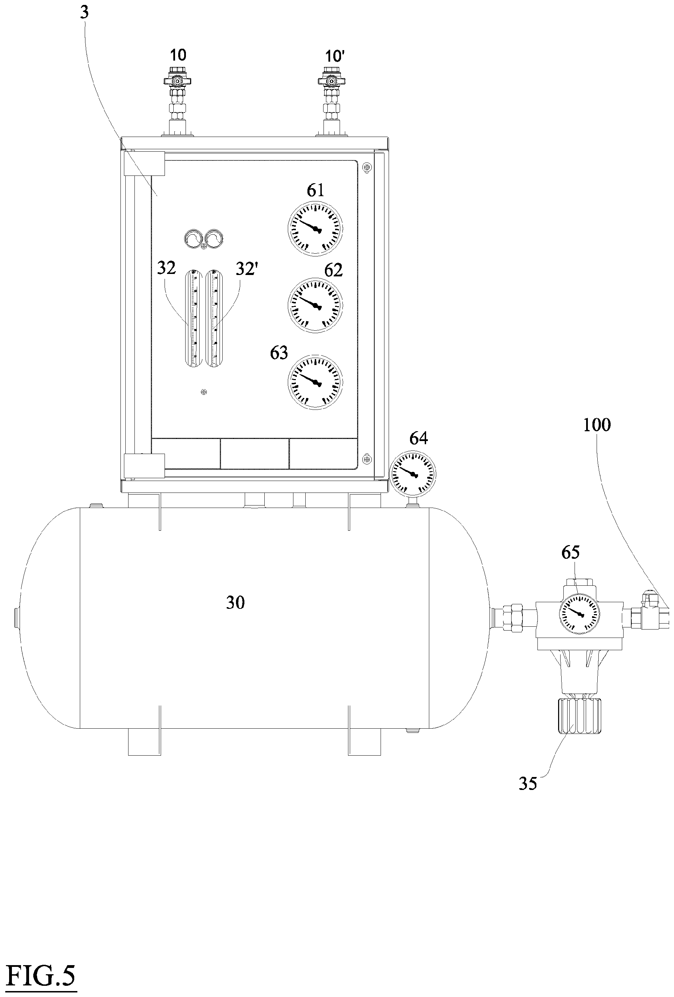

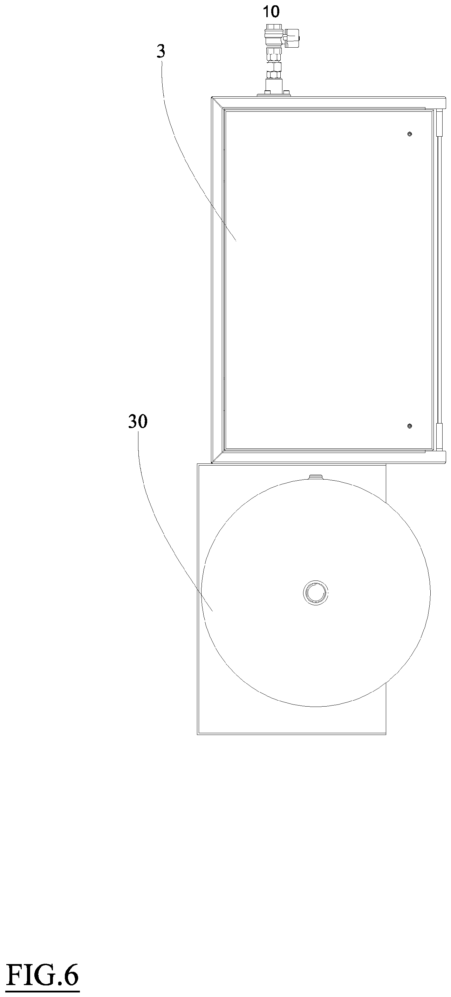

The aforementioned sub-step B6 is implemented by means of a mixer 3 (shown in Figures 5 and 6), which is part of an apparatus for actuating the method of preserving pizzas according to the present invention, in particular an apparatus capable of actuating steps B1, B2 and B4-B6 of the aforementioned method.

The mixer 3 comprises a pair of inlets for gaseous fluids, specifically a first inlet 10 and a second inlet 10'.

The inlets can be connected to storage devices for pressurised gaseous fluids, e.g. cylinders, or directly to pressurised gaseous fluid dispensing lines. In both cases, the pressure of the gaseous fluids arriving at the

inputs of the mixer is usually around 15 bar. In the embodiment illustrated in Figures 5 and 6, the gaseous fluids are respectively, carbon dioxide (CO2) and nitrogen (N2). Each inlet is connected to an inlet line comprising at least one main inlet valve and one filter. A pressure reducing device of a known type is arranged downstream of the filter, along the direction of flow of the gaseous fluid in each gaseous fluid inlet line. Preferably, the pressure reducer receives a gaseous fluid with a pressure of about 15 bar and dispenses it with a pressure of about 6 bar. Of course, the pressure reducer may be of different types and technical characteristics as long as it is capable of supplying downstream, along the direction of flow of the gaseous fluid, a predefined and constant pressure value, different from the upstream value, and within the envisaged operating limits.

Each supply line comprises, downstream of each pressure reducer along the direction of flow of the gaseous fluid, a measurement and adjustment assembly for the gaseous fluids supplied. The gaseous fluid measurement and adjustment assembly comprises at least one gaseous fluid flow measurement device, preferably a glass flowmeter 32, 32', and a gaseous fluid flow adjustment device, e.g. a micrometric regulating tap. This configuration is particularly advantageous as, in use, the flow meters and micrometric taps allow the flow to be measured and calibrated on each individual supply line.

There is also a pressure gauge 61 for measuring the nitrogen gas pressure and a pressure gauge 62 for measuring the carbon dioxide gas pressure.

Downstream of the micrometric taps, along the direction of flow of the gaseous fluid, each gaseous fluid in each supply line is mixed with the other gaseous fluid of a different nature contained in the other supply line. That is, nitrogen contained in one supply line exiting the pressure reducer is mixed with carbon dioxide contained in the other supply line exiting the pressure reducer.

The mixer 3 comprises a mixing area in which the nitrogen gas and carbon dioxide gas supply lines converge. There is a pressure gauge 63 to measure the pressure of the nitrogen-carbon dioxide gas mixture.

The nitrogen-carbon dioxide gas mixture flows into a tank 30 into which it is introduced for storage; there is a pressure gauge 64 to measure the pressure of the nitrogen-carbon dioxide mixture in the tank 30.

Finally, the tank 30 comprises an outlet 100 for connection, in use, to a mixture inlet line for the container 1.

The mixer 3 also includes a pressure gauge 65 to measure the pressure of the nitrogen-carbon dioxide mixture exiting the tank 30.

Preferably, in the outlet line of the nitrogen-carbon dioxide gas mixture from the tank 30 there is also a ball valve 35 which can be manually closed or opened to interrupt or activate the flow of the nitrogen-carbon dioxide gas mixture to the outlet 100.

The invention thus conceived is susceptible to several modifications and variations, all falling within the scope of the inventive concept.

Moreover, all the details can be replaced by other technically equivalent elements.

In practice, the materials used, as well as the contingent shapes and sizes, can be whatever according to the requirements without for this reason departing from the scope of protection of the following claims.

## Claims

1. Method for preserving a pizza, said method comprising:
- Baking (B1) a disc of pizza dough for a variable time between 1 and 3 minutes so as to make a pre-cooked pizza,
- Cooling (B2) the pre-cooked pizza to a temperature comprised between 3°C and 5°C,
- Placing (B4) said pre-cooked pizza in a container (1),
- Creating a vacuum inside the container (B5),
- Introducing (B6) a mixture of nitrogen and carbon dioxide into the container wherein the nitrogen concentration varies from 20% to 30% of the mixture and the carbon dioxide concentration varies from 80% to 70% of the mixture.

2. Method according to claim 1, **characterised in that** the nitrogen concentration is 27.5% of the mixture and the carbon dioxide concentration is 72.5% of the mixture.

3. Method according to claim 1, **characterised by** comprising a step (B3) for adding cheese to the now cooled pre-cooked pizza prior to placing (B4) the pre-cooked pizza into the container.

4. Method according to claim 1, **characterised in that** the cooling step (B2) of the pre-cooked pizza takes place at a temperature of 4°C.

5. Method according to claim 1, **characterised in that** said disc of pizza dough is baked (B1) at a temperature comprised between 380°C and 400°C.

6. Method according to claim 1, **characterised in that** the nitrogen and carbon dioxide mixture is introduced (B6) into the container for a time period comprised between 10 and 15 seconds.

7. Method according to claim 6, **characterised in that** the nitrogen and carbon dioxide mixture is introduced into the container for a time period comprised between 10 and 12 seconds.

8. Method according to claim 1, **characterised in that** toppings are introduced onto said disc of pizza dough before baking.

9. Method according to claim 1, **characterised in that** said disc of pizza dough is baked (B1) for a time period comprised between 1 minute 45 seconds and 2 minutes 15 seconds.

10. Apparatus for actuating the method of preserving a pizza in accordance with any one of the preceding claims, said apparatus comprising a mixer (3) having nitrogen and carbon dioxide at the input and configured to provide said mixture of nitrogen and carbon dioxide at the output to be introduced into said container (1) in which said pre-cooked pizza is placed and after creating a vacuum inside the (1) container.
